# FASCICULE DE BREVET EUROPEEN

(11) **EP 0 686 424 B1**
(45) Date de publication et mention de la délivrance du brevet: **01.03.2000**
(21) Numéro de dépôt: 95420146.3
(22) Date de dépôt: 08.06.1995
(51) Int. Cl.: B01D 63/06, B01D 29/52, B01D 46/24

(54) **Elément inorganique multicanal pour la filtration d'un fluide**
Anorganisches Mehrkanal-Filterelement zum Filtrieren von Fluiden
Inorganic multichannel element for filtering fluids

(30) Priorité: 08.06.1994 FR 9407206
(43) Date de publication de la demande: 13.12.1995
(73) Titulaire: T.A.M.I. INDUSTRIES, F-26110 Nyons (FR)
(72) Inventeur: Grangeon, André, F-84600 Valreas (FR); Lescoche, Philippe, F-26110 Nyons (FR)
(74) Mandataire: Thibault, Jean-Marc

(56) Documents cités:
- WO-A-93/07959
- JOURNAL OF MEMBRANE SCIENCE, vol. 39, 1988 AMSTERDAM, NL, pages 221-241, H.P. HSIEH 'Microporous Alumina Membranes'

## Description

La présente invention concerne le domaine technique de la séparation moléculaire ou particulaire mettant en oeuvre des éléments de séparation, appelés généralement membranes et constitués à partir de matériaux inorganiques.

L'objet de l'invention vise, plus précisément, la réalisation d'un élément inorganique de filtration de forme générale tubulaire permettant de concentrer, trier ou extraire des espèces moléculaires ou particulaires contenues dans un milieu fluide qui exerce une pression donnée sur la membrane.

L'objet de l'invention trouve une application particulièrement avantageuse dans le domaine de la nanofiltration, l'ultrafiltration, la microfiltration, la filtration ou l'osmose inverse.

Dans le domaine des éléments de filtration de forme tubulaire, chaque membrane est constituée d'un support poreux réalisé sous la forme d'un tube dont la surface interne est pourvue d'au moins une couche séparatrice dont la nature et la morphologie sont adaptées pour assurer la séparation des molécules ou des particules contenues dans le milieu liquide circulant à l'intérieur du tube. Une telle membrane réalise, par effet tamis, une séparation des espèces moléculaires ou particulaires du produit à traiter dans la mesure où toutes les molécules ou particules supérieures au diamètre des pores de la membrane sont arrêtées. La membrane répartie ainsi le volume entrant, en un premier volume appelé filtrat ou perméat et contenant les molécules ou particules ayant traversé la membrane, et en un second volume contenant les molécules ou particules retenues par la membrane.

La séparation des espèces moléculaires ou particulaires se caractérise principalement, d'une part, par le pouvoir de coupure, c'est-à-dire par la plus petite molécule ou particule totalement arrêtée par la membrane et, d'autre part, par la vitesse de passage à laquelle s'effectue cette séparation. La vitesse de passage à travers la membrane dépend des caractéristiques texturales de la couche (diamètre de pores, porosité) mais également de son épaisseur. Pour être efficace, une membrane doit posséder une vitesse de passage élevée et, par suite, une faible épaisseur. Le rôle du support est de permettre, par sa résistance mécanique, la réalisation de couches de faibles épaisseurs. Le support doit posséder comme caractéristique complémentaire, une très faible résistance hydraulique, de façon que la vitesse de passage, à travers sa porosité, ne provoque pas l'existence d'une perte de charge importante, ce qui nuirait à l'efficacité de la membrane. Ainsi, le support doit permettre d'assurer la résistance mécanique de la membrane, tandis que la couche séparatrice doit définir la perméabilité sans participer à la résistance mécanique.

Dans l'état de la technique, il est connu de nombreuses membranes réalisées à partir d'éléments tubulaires de filtration. Ainsi, il est connu de monter en parallèle des éléments tubulaires, à l'intérieur d'une enveloppe appelée module. D'une manière classique, les modules sont caractérisés par le rapport de la surface d'échange totale des membranes sur le volume du module. Bien entendu, l'objectif est de réaliser des modules dont la valeur de ce rapport soit la plus élevée possible. Pour augmenter ce rapport, il est évident qu'il convient de réduire les diamètres extérieur et intérieur du tube. Toutefois, il doit être considéré que les membranes inorganiques possèdent la caractéristique d'être fragiles, de sorte qu'il apparaît impossible d'utiliser, de façon industrielle, des tubes de faibles diamètres.

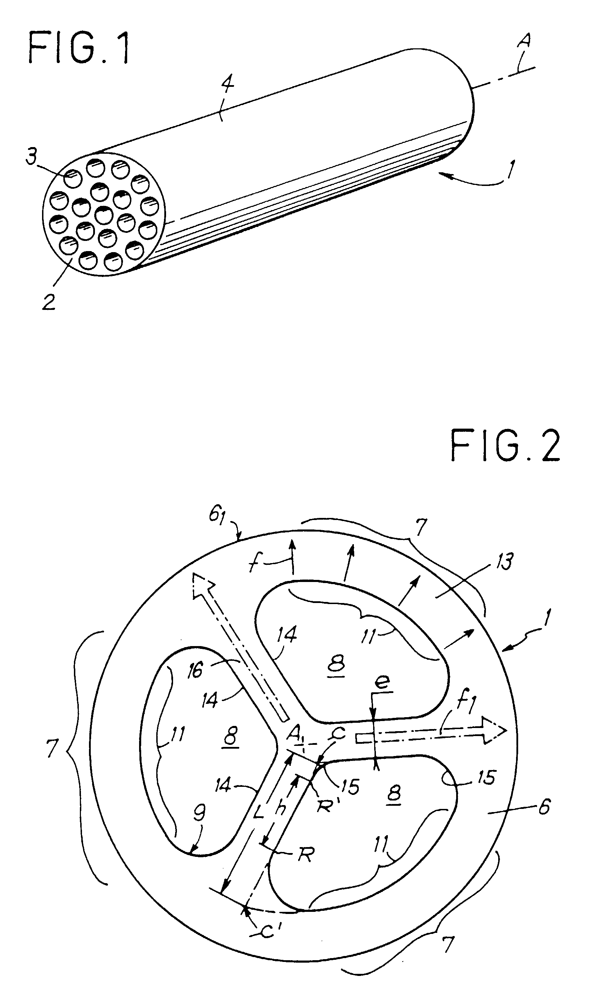

Pour augmenter ce rapport tout en évitant le problème de la fragilité, il a été mis au point un nouvel élément de filtration de type multicanal. Tel que cela ressort de la **fig. 1**, cet élément inorganique **1** de filtration comporte un support poreux rigide **2** de forme allongée présentant une section droite transversale polygonale ou, comme illustré, circulaire. Le support poreux **2**, qui est par exemple réalisé en céramique, est aménagé pour comporter une série de canaux **3** parallèles à l'axe central longitudinal **A** du support **2**. La surface des canaux **3** est recouverte par au moins une couche de séparation destinée à être en contact avec le milieu à séparer. La surface d'échange d'un élément de filtration multicanal est beaucoup plus élevée que celle d'un tube, ce qui permet d'accroître le rapport de la surface d'échange sur le volume.

Toutefois, il apparaît que l'élément multicanal possède un inconvénient majeur. Durant la séparation, le transfert du fluide s'effectue à travers la ou les couches, puis le fluide se répand dans la porosité du support pour se diriger vers la surface extérieure **4** du support. Tel que cela ressort clairement de la **fig. 1**, le trajet que doit suivre le filtrat avant d'atteindre la surface extérieure **4** du support, pour ce qui concerne le ou les canaux situés dans la partie centrale du support, est beaucoup plus long que celui des autres canaux, notamment périphériques. De plus, les filtrats provenant des canaux de la région centrale du support, récupèrent les filtrats provenant des autres canaux. Pour ces raisons, il apparaît une perte de charge pour le transfert du filtrat vers la surface extérieure du support. Cette perte de charge s'oppose à la pression de transfert et réduit la vitesse de passage. Il est à noter, également, qu'il existe une perte de charge, à un degré moindre, pour les autres canaux. En raison de la perte de charge constatée, la vitesse de passage d'un élément multicanal comprenant n canaux est inférieure à la somme des n éléments tubulaires (de même diamètre interne que les canaux), ce qui réduit l'intérêt de l'augmentation du rapport de la surface d'échange sur le volume.

Dans l'état de la technique, il est connu, par la demande de brevet **WO 93/07 959**, une autre forme de réalisation d'un élément tubulaire de filtration de type multicanal. Selon un premier mode de réalisation, l'élément de filtration comporte un support poreux inorganique dans lequel des canaux sont ménagés parallèlement à l'axe central du support et dont leurs centres sont situés sur un cercle coaxial à l'axe central. Chaque canal comporte, en section droite transversale, une paroi périphérique dirigée vers la surface extérieure et délimitant avec cette dernière, un couloir d'épaisseur constante assurant l'acheminement du filtrat. Chaque paroi périphérique est prolongée de part et d'autre par des parois radiales raccordées entre-elles et délimitant chacune une cloison avec la paroi radiale en vis-à-vis d'un canal voisin. Le profil des canaux est choisi de manière à laisser subsister des cloisons s'évasant en forme de coin vers l'extérieur du substrat. Selon un deuxième mode de réalisation, les axes des canaux sont situés, soit sur plusieurs cercles coaxiaux à l'axe du support, soit selon des couches parallèles les unes aux autres et à l'axe du support poreux. Selon ce deuxième mode de réalisation, les canaux voisins entre les deux séries laissent subsister une cloison s'évasant également vers l'extérieur du substrat. Il apparaît ainsi que la forme en coin favorise le transfert du perméat vers la surface extérieure du support.

Si ce deuxième mode de réalisation favorise le transfert du perméat, il doit être constaté que cette configuration n'apporte pas de solution au problème de la perte de perméabilité.

Cependant, la Déposante a mis en évidence que la première configuration permet de réduire la perte de charge pour le transfert du perméat, de sorte qu'il peut être obtenu une perméabilité très proche de celle d'éléments tubulaires de même diamètre interne que celui des canaux. En effet, selon cette disposition, les couloirs d'acheminement du filtrat présentent une épaisseur constante et se trouvent traversés par le fluide provenant exclusivement de la paroi périphérique correspondante des canaux. Le transfert du filtrat provenant des parois radiales est réalisé à travers la porosité des cloisons et la variation constante de l'épaisseur de ces cloisons permet une évacuation du filtrat sans qu'apparaissent des pertes de charge qui s'opposent à la pression de transfert.

Ce premier type de configuration d'un élément de filtration présente, toutefois, des inconvénients.

En effet, les cloisons subsistantes entre les canaux présentent une épaisseur croissante, de sorte que le rapport entre la partie la plus épaisse et la partie la plus mince soit au maximum de trois. Il apparaît que cette variation de l'épaisseur des cloisons ne permet pas d'obtenir des dépôts de couches réguliers. En effet, le volume poreux disponible augmente continuellement avec, pour conséquence, une épaisseur des dépôts qui croît de la partie la plus mince vers la partie la plus épaisse. Peu sensible pour des couches de microfiltration, cette variation d'épaisseur est génératrice de défauts par excès d'épaisseur pour les couches d'ultrafiltration et rédhibitoire pour des couches de nanofiltration.

Par ailleurs, le texte de ce document prévoit, dans une variante de réalisation, que la variation d'épaisseur de la cloison apparaisse au-delà de la moitié de la hauteur totale de la cloison. Cette configuration est encore plus mauvaise pour l'homogénéité des dépôts, car elle fait apparaître une variation brutale de ces dernières. La conséquence est l'apparition de fissures dues à des tensions durant le retrait provoqué par le séchage.

Un autre inconvénient est lié au fait que cette solution antérieure prévoit, entre les parois radiales et périphériques, des congés de raccordement présentant des angles de faible valeur. Dans ces conditions, il a été constaté, au niveau des zones de raccordement, la formation de ménisques durant l'opération de vidange de la solution de dépôt. Ces ménisques liquides entraînent l'accumulation localisée de la suspension de dépôt, ce qui est une source importante de défauts en raison de l'importante variation de l'épaisseur du dépôt ainsi réalisé.

L'objet de l'invention vise donc à remédier aux inconvénients énoncés ci-dessus, en proposant un élément inorganique multicanal de filtration d'un fluide, adapté pour minimiser la perte de charge lors du transfert du perméat et conçu pour permettre de réaliser des dépôts de couche séparatrice présentant une épaisseur régulière sur toute la surface des canaux de filtration.

Pour atteindre cet objectif, l'élément inorganique de filtration d'un milieu fluide, en vue de récupérer un filtrat, est du type comportant :
- un support poreux rigide inorganique de forme cylindrique présentant un axe central longitudinal,
- des canaux ménagés dans le support parallèlement à son axe central et dont les centres sont situés sur un cercle coaxial à l'axe central, chaque canal présentant :
   . une surface recouverte par au moins une couche séparatrice destinée à être en contact avec le milieu fluide,
   . au moins une paroi périphérique placée en vis-à-vis avec une partie de la surface extérieure du support et délimitant avec cette dernière un couloir d'épaisseur constante assurant l'acheminement du filtrat,
   . au moins une paroi radiale délimitant une cloison d'épaisseur avec la paroi radiale en regard d'un canal voisin,
   . et des congés de raccordement des parois entre elles permettant de déterminer :
      - la hauteur d'une cloison radiale correspondant à la distance entre les points de raccordement des congés avec la partie droite de la paroi radiale,
      - la hauteur théorique d'un côté radial d'un canal correspondant à la distance entre, d'une part, une référence centripète correspondant pour un même canal, à l'intersection au-delà d'un congé de raccordement d'une paroi radiale avec le prolongement au-delà du congé de raccordement de l'autre paroi radiale et, d'autre part, une référence centrifuge correspondant, pour un même canal, à l'intersection entre le prolongement du cercle définissant la paroi courbe d'un canal avec le prolongement d'une paroi radiale.

Selon l'invention, l'élément inorganique de filtration est caractérisé en ce que :
- chaque cloison radiale possède la même hauteur et une épaisseur constante sur toute sa hauteur, qui est supérieure ou égale à la moitié de la hauteur théorique du côté radial d'un canal, le rapport de la hauteur d'une cloison sur son épaisseur étant inférieur ou égal à 8,
- et les congés de raccordement présentent un rayon compris entre 0,3 et 1,5 mm.

L'élément de filtration selon l'invention offre l'avantage de ne pas présenter de défauts pour les couches séparatrices déposées en raison, notamment, de l'épaisseur constante des cloisons et du dimensionnement des congés de raccordement, tout en permettant d'assurer une bonne évacuation du filtrat. Par ailleurs, l'objet de l'invention permet d'obtenir un élément de filtration présentant une vitesse de passage sensiblement de même valeur que celle correspondant à la somme d'éléments tubulaires dont le diamètre interne est égal à la section des canaux.

Diverses autres caractéristiques ressortent de la description faite ci-dessous en référence aux dessins annexés qui montrent, à titre d'exemples non limitatifs, des formes de réalisation et de mise en oeuvre de l'objet de l'invention.

La **fig. 1** est une vue générale d'un exemple de réalisation d'un élément de filtration multicanal de l'art antérieur.

La **fig. 2** est une vue en coupe transversale d'un exemple de réalisation d'un élément de filtration multicanal selon l'invention comportant trois canaux.

La **fig. 3** est une vue montrant un élément de filtration analogue à la **fig. 2** mais comportant sept canaux.

Les **fig. 4** et **5** sont des vues en coupe transversale de deux autres variantes de réalisation d'un élément de filtration selon l'invention.

Tel que cela ressort de la **fig. 2**, l'élément inorganique de filtration **1** conforme à l'invention, est adapté pour assurer la séparation ou la filtration de molécules ou de particules contenues dans un milieu fluide, de préférence liquide, de nature diverse comportant une phase solide ou non. L'élément de filtration **1** comporte un support poreux rigide inorganique **6**, constitué dans une matière dont la résistance au transfert est adaptée à la séparation à effectuer. Le support **6** est réalisé à partir de matériaux inorganiques, tels que des oxydes métalliques, du carbone ou des métaux. Le support **6** est réalisé, généralement, sous la forme allongée ou d'un conduit s'étendant selon un axe central longitudinal **A**. Le support poreux **6** possède un diamètre moyen équivalent des pores compris entre 2 et 12 µm et, de préférence, de l'ordre de 5 µm. Le support **6** possède une section droite transversale hexagonale ou, comme dans l'exemple illustré à la **fig. 2**, circulaire. Le support **6** offre ainsi une surface extérieure **6**_{**1**} cylindrique ou hexagonale.

Le support **6** est aménagé pour comporter au moins deux, et dans l'exemple illustré à la **fig. 2**, trois canaux **8** réalisés parallèlement à l'axe **A** du support et dont leurs centres sont situés sur un cercle coaxial à l'axe central **A** du support. Le support poreux **6** possède, selon cet exemple, un diamètre compris entre 9 et 14 mm et, de préférence, de l'ordre de 10 mm. Les canaux **8** présentent chacun une surface **9** recouverte par au moins une couche séparatrice non représentée, destinée à être en contact avec le milieu fluide à traiter circulant à l'intérieur des canaux **8**. La nature de la ou des couches séparatrices est choisie en fonction du pouvoir de séparation ou de filtration à obtenir et forme, avec le support **6**, une liaison intime, de façon que la pression provenant du milieu liquide soit transmise au support poreux. Cette ou ces couches peuvent être déposées à partir, par exemple, de suspensions contenant au moins un oxyde métallique et classiquement utilisées dans la production des éléments de filtration minéraux. Cette ou ces couches sont soumises, après séchage, à une opération de frittage qui permet de les consolider et de les lier entre-elles, ainsi qu'au support poreux **6**.

Conformément à l'invention, chaque canal **8** est aménagé de façon qu'une zone **11** de sa surface **9**, désignée par paroi courbe ou périphérique, soit placée directement en vis-à-vis avec une fraction **7** de la surface externe **6**_{**1**} du support, afin de former un couloir d'acheminement **13** pour le filtrat provenant exclusivement de ladite zone **11** du canal correspondant. Tous les canaux **8** réalisés délimitent ainsi chacun un couloir **13** entre leur paroi périphérique **11** et une fraction **7** de la surface externe **6**_{**1**} du support, traversé exclusivement par le fluide provenant de chacune des zones correspondantes **11** et dont le trajet est représenté par les flèches **f**. Tel que cela ressort de la **fig. 2**, le filtrat récupéré par chacune des zones **7** provient exclusivement du fluide traversant le support poreux **6** à partir des parois périphériques **11** de la surface des canaux **8**.

Conformément à l'invention, il n'apparaît pas de canaux intermédiaires entre l'axe **A** du support et la surface externe **7** du support, à la différence de l'élément multicanal de l'art antérieur illustré à la **fig. 1**, et selon lequel les canaux de la région centrale ne comportent pas de couloir d'acheminement direct du filtrat provenant exclusivement de chacun desdits canaux. En effet, le filtrat provenant de chaque canal de la région centrale vient s'ajouter au filtrat issu des canaux périphériques avant d'atteindre la surface externe **7** du support. Dans la mesure où tous les canaux **8** de l'élément selon l'invention présentent un couloir de transfert direct avec la surface externe, la perte de charge pour le transfert du filtrat est considérablement réduite par rapport aux solutions techniques antérieures.

Selon la variante de réalisation illustrée à la **fig. 2**, tous les canaux **8** présentent une section droite transversale identique et chaque canal **8** possède une paroi courbe **11** qui est concentrique à la surface externe **7** du support. Selon une caractéristique de l'invention, chaque couloir **13** délimité par une paroi courbe présente, selon toute la longueur des zones **7** et **11**, une épaisseur sensiblement constante. Avantageusement, tous les couloirs **13** possèdent une épaisseur sensiblement identique.

D'après la description qui précède, les couloirs **13** assurent le transfert du fluide traversant le support poreux **6** à partir des parois périphériques **11** des canaux **8**. Il est à noter qu'un transfert du fluide, représenté par les flèches **f**_{**1**}, est également réalisé à partir de la surface restante des canaux **8**, à savoir des parois radiales **14**, de sorte qu'il se produit un transfert du filtrat à travers la porosité du support subsistant entre les canaux **8**. En effet, chaque canal **8** comporte au moins une, et dans l'exemple illustré à la **fig. 2,** deux parois radiales **14** reliées entre elles et à la paroi périphérique **11** par l'intermédiaire de congés de raccordement **15**. Chaque paroi radiale **14** délimite, avec la paroi radiale d'un canal voisin placée en vis-à-vis, une cloison **16** présentant, selon une caractéristique de l'invention, une épaisseur constante. La réalisation des cloisons **16** avec une épaisseur constante permet d'obtenir des dépôts réguliers en épaisseur pour les couches séparatrices sur toute sa hauteur **h**. Pour éviter toute ambiguïté, il doit être compris que la hauteur **h** d'une cloison **16** ou d'une paroi radiale **14** est la distance entre les points de raccordement **R, R'** des congés **15** avec la partie droite constitutive de la paroi radiale **14** (**fig. 2**). Par conséquent, la paroi radiale **14** ne comprend pas les deux arrondis **15** qui la bordent de part et d'autre. La paroi radiale **14** correspond à la partie droite prise entre les deux points de raccordement **R, R'** des arrondis **15**, tandis que l'épaisseur **e** constante de la cloison peut être prise en n'importe quel point entre ces deux limites **R, R'**.

Selon une caractéristique de l'invention, le rapport de la hauteur **h** sur l'épaisseur **e** d'une cloison **16** est égal ou inférieur à 8 et, de préférence, inférieur ou égal à 6. Il est à noter que dans le cas de la réalisation d'un support poreux possédant un faible diamètre et des arrondis de rayons élevés, la hauteur **h** de la partie droite peut être faible, de sorte que le rapport **h**/**e** est faible. Par exemple, la valeur inférieure du rapport **h**/**e** est de l'ordre de 0,5. En effet, les parois radiales **14** participent au transfert du filtrat se produisant à travers la porosité du support subsistant entre les canaux **8**. Pour une même épaisseur de la cloison radiale, le débit à l'intérieur de la porosité est égal au produit de la perméabilité des couches déposées sur les parois par la surface de ces parois et par la force agissante. Ainsi, pour une même perméabilité et une même pression, le débit dépend de la surface et donc de la hauteur des parois. La porosité des parois radiales **14** étant caractérisée par une perméabilité, la pression à l'intérieur des ces parois dépend :
- de la valeur de cette perméabilité,
- du débit traversant les couches,
- de la section de la paroi radiale.

A titre d'exemple, pour une pression à la sortie de la paroi radiale de l'ordre de 0,3 bar, qui correspond à une perte de débit significative, car cette pression s'oppose à la force agissante, il doit être noté que le rapport **h**/**e** est égal à 8 pour une cloison de 1 mm d'épaisseur. La valeur 8 pour le rapport **h**/**e** correspond donc à une valeur maximum en dessous de laquelle l'élément de filtration présente un bon fonctionnement. Dans la mesure où, d'une part, tous les canaux **8** de l'élément selon l'invention présentent un couloir de transfert direct avec la surface externe et, d'autre part, les cloisons radiales ont une hauteur **h** et une épaisseur **e**, telle que le rapport **h**/**e** ≤ 8, il peut ainsi être obtenu une perméabilité très proche de celle correspondant, dans l'exemple illustré, à trois éléments tubulaires de même diamètre interne que celui des canaux. Ainsi, pour chaque cloison **16**, la hauteur **h** est comprise entre 1 et 5 mm et l'épaisseur **e** est comprise entre 0,4 et 2,5 mm. Pour satisfaire cette définition, chaque cloison radiale **16** possède la même hauteur **h**. A titre d'exemple, il peut être prévu pour un support poreux d'un diamètre extérieur de 10 mm (**fig. 2**) que la hauteur **h** de chaque paroi radiale **14** soit égale à 1,8 mm, tandis que l'épaisseur de la cloison **16** soit de 1 mm pour obtenir un rapport égal à 1,8.

Selon une autre caractéristique de l'invention, les parois **11, 14** des canaux sont reliées entre-elles par des congés de raccordement **15** présentant chacun un rayon compris entre 0,3 mm et 1, 5 mm. La réalisation de ces arrondis de raccordement permet de conserver un dépôt uniforme pour les couches séparatrices. De préférence, mais non exclusivement, les congés de raccordement **15**, entre une paroi radiale **14** et une paroi périphérique **11**, présentent un rayon compris entre 0,5 et 1,5 mm, tandis que les congés de raccordement **15**, entre les deux parois radiales **14,** présentent un rayon compris entre 0,3 et 0,7 mm.

Selon une autre caractéristique de réalisation de l'invention, la hauteur **h** de la paroi radiale **14** est supérieure ou égale à la moitié de la hauteur théorique **L** d'un côté radial d'un canal **8**, soit **h** ≥ **L/2**. Un côté radial d'un canal **8** comporte, en plus de la paroi radiale **14**, des arrondis de raccordement **15**. D'une façon plus précise, la hauteur théorique **L** d'un côté radial d'un canal est la distance entre une référence centripète **C** et une référence centrifuge **C'**. La référence centripète **C** correspond, pour un même canal **8**, à l'intersection au-delà d'un congé de raccordement **15** d'une paroi radiale **14** avec le prolongement au-delà du congé de raccordement de l'autre paroi radiale. La référence centrifuge **C'** correspond, pour un même canal **8**, à l'intersection entre le prolongement du cercle définissant la paroi courbe **11** d'un canal avec le prolongement d'une paroi radiale.

Selon une autre caractéristique avantageuse de l'invention, en relation de la **fig. 2**, les canaux **8** présentent conjointement, selon une section droite transversale, un périmètre total compris entre 9 et 15 mm et, de préférence, de l'ordre de 12,5 mm, et une surface totale comprise entre 8 et 15 mm² et, de préférence, de l'ordre de 11,4 mm². L'élément de filtration selon l'invention présente ainsi un diamètre hydraulique compris entre 2,13 et 6,6 mm et, de préférence, de l'ordre de 3,6 mm.

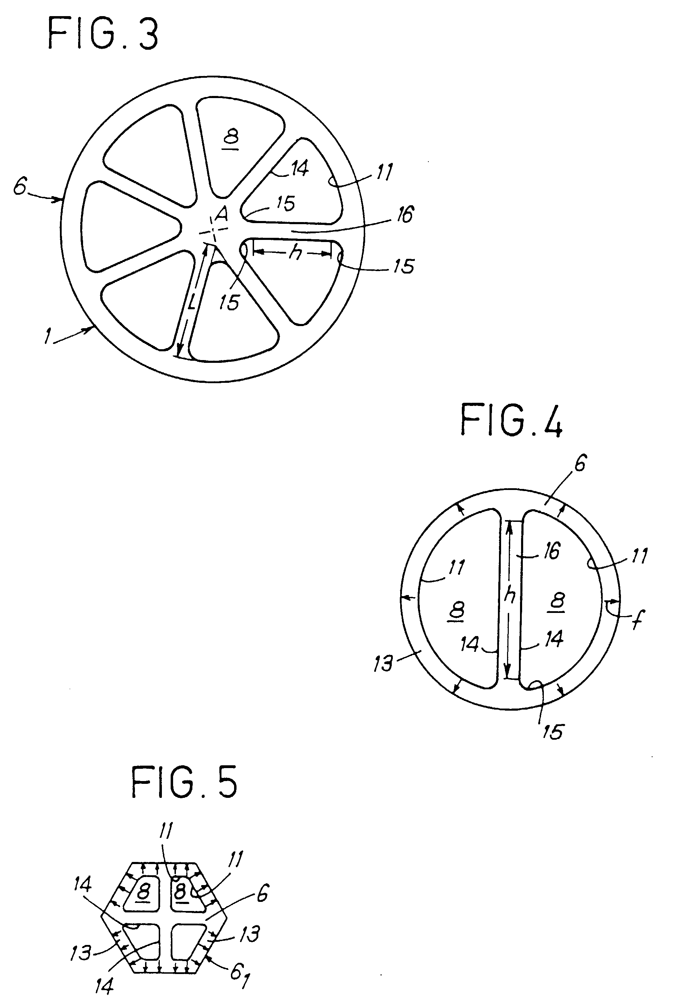

Dans l'exemple qui précède, l'élément de filtration comporte trois canaux **8**. Il est clair que l'objet de l'invention peut être mis en oeuvre avec un élément de filtration comportant un nombre différent de canaux. La **fig. 3** illustre, à titre d'exemple, un élément de filtration **1** comportant sept canaux **8**. Cet élément de filtration respecte les caractéristiques de l'invention, à savoir des cloisons **16** d'épaisseur constante sur toute leur hauteur **h**, et un rapport entre la hauteur et l'épaisseur **e** inférieur ou égal à 8, tandis que les congés de raccordement **15** entre les parois respectent les valeurs indiquées ci-dessus. Une telle disposition permet d'obtenir un élément dont les couches séparatrices déposées ne présentent pas de défaut, tandis que le dimensionnement des cloisons est adapté pour assurer une bonne évacuation du filtrat. Ainsi, pour chaque cloison **16**, la hauteur **h** est comprise entre 4 et 9 mm et l'épaisseur est comprise entre 0,75 et 2,5 mm. A titre d'exemple, la hauteur **h** de chaque paroi radiale est égale à 6,1 mm, tandis que l'épaisseur **e** de chaque paroi radiale est égale à 1,4 mm, de sorte que le rapport **h**/**e** est égal à 4,35.

Selon cette variante de réalisation, les canaux **8** présentent conjointement, selon une section droite transversale, un périmètre total compris entre 23 et 30 mm et, de préférence, de l'ordre de 28,3 mm, et une surface totale comprise entre 36 et 53 mm² et, de préférence, de l'ordre de 51,5 mm². L'élément de filtration selon l'invention présente ainsi un diamètre hydraulique compris entre 4,8 et 9,3 mm et, de préférence, 6,06 mm. Dans cet exemple de réalisation, le support poreux **6** possède un diamètre compris entre 20 et 26 mm et, de préférence égal à 25 mm.

Bien entendu, il peut être envisagé de réaliser un élément de filtration **1** comportant des canaux **8** présentant un profil de section droite transversale différent, tel que par exemple polygonale ou pseudo demi-circulaire. Ainsi, tel que cela ressort de la **fig. 4**, l'élément de filtration comporte deux canaux **8** placés l'un à côté de l'autre, suivant le diamètre du support **6**. Chaque canal **8** comporte au moins une paroi courbe **11** placée directement en regard avec une fraction de la surface externe **7** du support, afin de former un couloir d'acheminement **13** pour le filtrat provenant exclusivement de la surface correspondante du canal. Chaque canal **8** laisse subsister, entre leur paroi radiale **14**, une cloison centrale **16** présentant une épaisseur constante. Pour chaque canal **8**, la paroi courbe **11** est reliée à la paroi radiale **14** par l'intermédiaire de deux congés de raccordement **15**. Bien entendu, le support et les canaux **8** sont aménagés pour respecter les critères donnés en relation de la **fig. 2**. Ainsi, par exemple, la longueur **h** de la paroi radiale est de 8,5 mm, tandis que l'épaisseur de la paroi radiale est égale à 1,21 mm pour donner un rapport **h**/**e** égal à 8. Le diamètre du support poreux **6** est de 10 mm.

La **fig. 5** illustre une autre variante de réalisation dans laquelle l'élément de filtration **1** possède une section droite transversale polygonale, du type hexagonale. Le support **6** est aménagé pour comporter quatre canaux **8** possédant chacun deux parois périphériques **11** délimitant chacune, avec la surface externe **6**_{**1**}, un couloir d'acheminement **13** d'épaisseur constante. Chaque canal **8** comporte également deux parois radiales **14**. Par exemple, la longueur d'un côté de l'hexagone est de 20 mm, tandis que la hauteur **h** des parois radiales est de 12 mm et l'épaisseur des parois radiales est de 4 mm.

Bien entendu, les éléments de filtration **1** selon l'invention peuvent être associés pour constituer des modules réalisés par les techniques classiques.

## Revendications

1. Elément inorganique de filtration d'un milieu fluide, en vue de récupérer un filtrat, est du type comportant :
- un support poreux rigide inorganique (**6**) de forme cylindrique présentant un axe central longitudinal (**A**),
- des canaux (**8**) ménagés dans le support parallèlement à son axe central et dont les centres sont situés sur un cercle coaxial à l'axe central, chaque canal présentant :
. une surface **(9)** recouverte par au moins une couche séparatrice destinée à être en contact avec le milieu fluide,
. au moins une paroi périphérique (**11**) placée en vis-à-vis avec une partie **(7)** de la surface extérieure **(6**_{**1**}**)** du support et délimitant avec cette dernière un couloir (**13**) d'épaisseur constante assurant l'acheminement du filtrat,
. au moins une paroi radiale (**14**) délimitant une cloison (**16**) d'épaisseur **(e)** avec la paroi radiale en regard d'un canal voisin,
. et des congés (**15**) de raccordement des parois entre elles permettant de déterminer :
- la hauteur (**h**) d'une cloison radiale (**16**) correspondant à la distance entre les points de raccordement (**R, R'**) des congés avec la partie droite de la paroi radiale (**14**),
- la hauteur théorique (**L**) d'un côté radial d'un canal correspondant à la distance entre, d'une part, une référence centripète (**C**) correspondant pour un même canal (**8**), à l'intersection au-delà d'un congé de raccordement (**15**) d'une paroi radiale (**14**) avec le prolongement au-delà du congé de raccordement de l'autre paroi radiale et, d'autre part, une référence centrifuge (**C'**) correspondant pour un même canal, à l'intersection entre le prolongement du cercle définissant la paroi courbe (**11**) d'un canal avec le prolongement d'une paroi radiale,
caractérisé en ce que :
- chaque cloison radiale (**16**) possède la même hauteur et une épaisseur **(e)** constante sur toute sa hauteur **(h)** qui est supérieure ou égale à la moitié de la hauteur théorique (**L**) du côté radial d'un canal, le rapport de la hauteur (**h**) d'une cloison sur son épaisseur (**e**) étant inférieur ou égal à 8,
- et les congés de raccordement (**15**) présentent un rayon compris entre 0,3 et 1,5 mm.

2. Elément selon la revendication 1, caractérisé en ce qu'il comporte:
- un support poreux (**6**) possédant un diamètre compris entre 9 et 14 mm,
- trois canaux (**3**),
- et, pour chaque cloison (**16**), une hauteur comprise entre 1 mm et 5 mm et une épaisseur comprise entre 0,4 mm et 2,5 mm.

3. Elément selon la revendication 1, caractérisé en ce qu'il comporte :
- un support poreux (**6**) possédant un diamètre compris entre 20 et 26 mm,
- sept canaux (**8**),
- et, pour chaque cloison (**16**), une hauteur comprise entre 4 et 9 mm et une épaisseur comprise entre 0,75 et 2,5 mm.

4. Elément selon la revendication 1 ou 2, caractérisé en ce que les canaux (**8**) présentent conjointement un périmètre, total compris entre 9 et 15 mm et, en section droite transversale, une surface totale comprise entre 8 et 15 mm².

5. Elément selon la revendication 3, caractérisé en ce que les canaux (**8**) présentent conjointement un périmètre total compris entre 23 mm et 30 mm et, en section droite transversale, une surface totale comprise entre 36 et 53 mm².

6. Elément selon la revendication 1, caractérisé en ce que les congés de raccordement (**15**), entre une paroi radiale et une paroi périphérique, présentent un rayon compris entre 0,5 et 1,5 mm, tandis que les congés de raccordement, entre deux parois radiales, présentent un rayon compris entre 0,3 et 0,7 mm.

7. Elément selon la revendication 1, caractérisé en ce que les couloirs d'acheminement (**13**) du filtrat présentent une épaisseur constante et identique pour tous les canaux.

8. Module de filtration pour fluide, caractérisé en ce qu'il comporte une série d'éléments inorganiques (**1**) de filtration conforme à la revendication 1.

## Claims

1. An inorganic element for filtering a fluid medium, for the purpose of recovering a filtrate, the element being of the type comprising:
- a rigid inorganic porous support (**6**) of cylindrical shape having a longitudinal central axis (**A**); and
- channels (**8**) formed in the support, parallel to its central axis, and having centres situated on a circle that is coaxial about the central axis, each channel presenting:
. a surface (**9**) that is covered in at least one separating layer designed to come into contact with the fluid medium;
. at least one peripheral wall (**11**) facing a portion (7) of the outside surface **(6**_{**1**}**)** of the support and co-operating therewith to define a passage (**13**) of constant thickness through which the filtrate passes,
. at least one radial wall (**14**) co-operating with the facing radial wall of an adjacent channel to define a partition (**16**) of thickness (**e**), and
. connection fillets (**15**) for connecting the walls to one another for the purpose of determining :
- the height (**h**) of a radial partition (**16**) corresponding to the distance between the points (**R, R'**) where the fillets join the straight portion of the radial wall **(14);** and
- the theoretical height (**L**) of a radial side of a channel corresponding to the distance between, on the one hand, a centripetal reference (**C**) corresponding, for the same channel (**8**), to the intersection beyond a connection fillet (**15**) between one radial wall (**14**) and the other radial wall, as extended beyond the connection fillet and, on the other hand, a centrifugal reference **(C')** corresponding for the same channel, to the intersection between the circle defining the curved wall (**11**) of the channel and said radial wall, as extended;
characterised in that:
- each radial partition (**16**) has the same height and is of constant thickness (**e**) over its entire height (**h**) which is not less than half the theoretical height (**L**) of the radial side of a channel, with the ratio of the height (**h**) of a partition divided by its thickness being not greater than 8; and
- the connection fillets (**15**) have a radius lying in the range 0.3 mm to 1.5 mm.

2. An element according to claim 1, characterised in that it comprises:
- a porous support (**6**) having a diameter lying in the range 9 mm to 14 mm;
- three channels (**8**); and
- for each partition (**16**), a height lying in the range 1 mm to 5 mm, and a thickness lying in the range 0.4 mm to 2.5 mm.

3. An element according to claim 1, characterised in that it comprises:
- a porous support (**6**) having a diameter lying in the range 20 mm to 26 mm;
- seven channels (**8**); and
- for each partition (**16**), a height lying in the range 4 mm to 9 mm, and a thickness lying in the range 0.75 mm to 2.5 mm.

4. An element according to claim 1 or 2, characterised in that the channels (**8**) together present a total perimeter lying in the range 9 mm to 15 mm, and in right cross-section, a total surface area lying in the range 8 mm² to 15 mm².

5. An element according to claim 3, characterised in that the channels (**8**) together present a total perimeter lying in the range 23 mm to 30 mm, and in right cross-section, a total surface area lying in the range 36 mm² to 53 mm².

6. An element according to claim 1, characterised in that the connection fillets (**15**) between a radial wall and a peripheral wall have a radius lying in the range 0.5 mm to 1.5 mm, whereas the connection fillets between two radial walls have a radius lying in the range 0.3 mm to 0.7 mm.

7. An element according to claim 1, characterised in that the passages (**13**) for conveying filtrate are of constant thickness that is identical for all of the channels.

8. A fluid filter module characterised in that it includes a series of inorganic filter elements (**1**) in accordance with claim 1.

## Patentansprüche

1. Anorganisches Element für die Filtration eines fluiden Mediums, um ein Filtrat zu gewinnen, ist von dem Typ, umfassend:
- einen steifen porösen anorganischen Träger (6) von zylindrischer Form, der eine zentrale Längsachse (A) aufweist,
- Kanäle (8), die in dem Träger parallel zu seiner zentralen Achse angeordnet sind und deren Zentren sich auf einem zu der zentralen Achse koaxialen Kreis befinden, wobei jeder Kanal aufweist:
. eine Oberfläche (9), die durch mindestens eine Trennschicht, die dazu bestimmt ist, in Kontakt mit dem fluiden Medium zu stehen, bedeckt wird,
. mindestens eine periphere Wand (11), die gegenüber einem Teil (7) der äußeren Oberfläche (6₁) des Trägers angeordnet ist und mit diesem letzteren einen Fördergang (13) konstanter Dicke, der die Beförderung des Filtrats sicherstellt, begrenzt,
. mindestens eine radiale Wand (14), die eine Abteilung (16) mit einer Dicke (e) mit der radialen Wand in Hinblick auf einen benachbarten Kanal begrenzt,
. und Hohlkehlen (15) zur Verbindung der Wände, zwischen welchen man bestimmen kann:
- die Höhe (h) einer radialen Abteilung (16), die dem Abstand zwischen den Verbindungspunkten (R,R') der Hohlkehlen mit dem geraden Teil der radialen Wand (14) entspricht,
- die theoretische Höhe (L) eines radialen Maßes eines Kanals, die dem Abstand zwischen einerseits einem zentripetalen Bezugspunkt (C), der für einen gleichen Kanal (8) dem Schnittpunkt einer radialen Wand (14) jenseits einer Verbindungshohlkehle (15) mit der Verlängerung der anderen radialen Wand jenseits der Verbindungshohlkehle entspricht, und andererseits einem zentrifugalen Bezugspunkt (C'), der für einen gleichen Kanal dem Schnittpunkt zwischen der Verlängerung des die gekrümmte Wand (11) eines Kanals definierenden Kreises mit der Verlängerung einer radialen Wand entspricht, entspricht,
dadurch gekennzeichnet, daß:
- jede radiale Abteilung (16) die gleiche Höhe und eine konstante Dicke (e) über ihre gesamte Höhe (h) hinweg aufweist, die höher als die oder gleich der Hälfte der theoretischen Höhe (L) des radialen Maßes eines Kanals ist, wobei das Verhältnis der Höhe (h) einer Abteilung zu ihrer Dicke (e) kleiner als oder gleich 8 ist,
- und die Verbindungshohlkehlen (15) einen Radius zwischen 0,3 und 1,5 mm aufweisen.

2. Element nach Anspruch 1, dadurch gekennzeichnet, daß es umfaßt:
- einen porösen Träger (6), der einen Durchmesser zwischen 9 und 14 mm aufweist,
- drei Kanäle (3),
- und für jede Abteilung (16) eine Höhe zwischen 1 mm und 5 mm und eine Dicke zwischen 0,4 mm und 2,5 mm.

3. Element nach Anspruch 1, dadurch gekennzeichnet, daß es umfaßt:
- einen porösen Träger (6), der einen Durchmesser zwischen 20 und 26 mm aufweist,
- sieben Kanäle (3),
- und für jede Abteilung (16) eine Höhe zwischen 4 und 9 mm und eine Dicke zwischen 0,75 und 2,5 mm.

4. Element nach Anspruch 1 oder 2, dadurch gekennzeichnet, daß die Kanäle (8) gemeinsam einen Gesamtumfang zwischen 9 und 15 mm und in dem transversalen geraden Abschnitt eine Gesamtoberfläche zwischen 8 und 15 mm² aufweisen.

5. Element nach Anspruch 3, dadurch gekennzeichnet, daß die Kanäle (8) gemeinsam einen Gesamtumfang zwischen 23 mm und 30 mm und in dem transversalen geraden Abschnitt eine Gesamtoberfläche zwischen 36 und 53 mm² aufweisen.

6. Element nach Anspruch 1, dadurch gekennzeichnet, daß die Verbindungshohlkehlen (15) zwischen einer radialen Wand und einer peripheren Wand einen Radius zwischen 0,5 und 1,5 mm aufweisen, wohingegen die Verbindungshohlkehlen zwischen zwei radialen Wänden einen Radius zwischen 0,3 und 0,7 mm aufweisen.

7. Element nach Anspruch 1, dadurch gekennzeichnet, daß die Fördergänge (13) zur Beförderung des Filtrats eine konstante und für alle Kanäle gleiche Dicke aufweisen.

8. Filtrationsmodul für ein Fluid, dadurch gekennzeichnet, daß es eine Reihe von anorganischen Filtrationselementen (1) gemäß Anspruch 1 umfaßt.
